# EUROPÄISCHE PATENTANMELDUNG

(11) **EP 0 693 849 A1**
(43) Veröffentlichungstag der Anmeldung: **24.01.1996**
(21) Anmeldenummer: 95201988.3
(22) Anmeldetag: 19.07.1995
(51) Int. Cl.: H04M 9/08

(54) **System zum Übertragen von codierten Sprachsignalen**

(30) Priorität: 23.07.1994 DE 4426226
(71) Anmelder: Philips Patentverwaltung GmbH, D-22335 Hamburg (DE); PHILIPS ELECTRONICS N.V., NL-5621 BA Eindhoven (NL)
(72) Erfinder: Hellwig, Karl, D-22335 Hamburg (DE); Dietsch, Rainer, D-22335 Hamburg (DE); Lorenz, Dietmar, D-22335 Hamburg (DE)
(74) Vertreter: Poddig, Dieter, Dipl.-Ing.

(57) **Zusammenfassung**

Für eine komplexe Codierung von Sprachsignalen, wie diese beispielsweise beim GSM-Half-Rate-Sprachcoder verwendet wird, ist ein Signalprozessor erforderlich. Andererseis ist für eine Freisprecheinrichtung eine Recheneinrichtung erforderlich, die adaptiv Filterkoeffizienten berechnet. Dies erfolgt jedoch nur in Sprachpausen, in denen der Sprachcoder in einen Modus geschaltet wird, in dem er mit nur wenig Verarbeitungsaufwand Codes für Hintergrundgeräusch erzeugt. Erfindungsgemäß wird daher der Signalprozessor für die Codieranordnung dazu verwendet, um in Sprachpausen die Koeffizienten für das Filter zur Echo-Unterdrückung zu berechnen. Damit ist nur ein einziger Signalprozessor erforderlich, der auf diese Weise doppelt ausgenutzt werden kann.

## Beschreibung

Die Erfindung betrifft ein System zum Übertragen von codierten Sprachsignalen mit einer sehr komplexen Codierung, beispielsweise wie in dem Buch "Advances in Speech Coding" von Bishnu S. Atal, Vladimir Cuperman und Allen Gersho, Kluwer Academic Publishers 1991, insb. Seiten 69 bis 79 beschrieben ist, sowie eine mobile Station für ein solches System und eine Schaltungsanordnung dafür. Ein derartiges System wird insbesondere beim Mobilfunk zur Übertragung von Sprachsignalen zwischen einer mobilen Station und einer festen Station verwendet. Eine solche Codierung erfordert einen hohen Aufwand, der praktisch nur mit einem hochentwickelten Signalprozessor durchführbar ist.

Die Sprachsignale werden von natürlichen Sprechern erzeugt, wodurch während eines Gesprächs praktisch immer auch Sprachpausen auftreten, wo die eine Stelle nicht spricht, sondern nur die Sprachsignale der anderen Stelle hört. Um der sprechenden Person in dieser anderen Stelle jedoch die Gewißheit zu geben, daß die Verbindung Zwischen beiden Stellen noch besteht, obwohl die Person in der ersten Stelle momentan nicht spricht, werden in dieser ersten Stelle Codes für ein Hintergrundgeräusch erzeugt und übertragen.

Für die Benutzung der Sprachverbindung werden von den sprechenden Personen üblicherweise Handapparate benutzt, bei denen Hörer bzw. Lautsprecher und Mikrofon räumlich getrennt sind, so daß im Normalfall nur ein sehr kleiner Bruchteil des vom Hörer ausgesandten akustischen Signals das Mikrofon desselben Handapparats erreicht. Dadurch empfängt jeder Sprecher nur ein schwaches Echo, das zudem nur geringfügig zeitlich verzögert ist und dadurch nicht störend wirkt. Es ist jedoch auch erwünscht, Freisprecheinrichtungen zu verwenden, bei denen das Mikrofon und der Lautsprecher beide eine gewisse Entfernung von der sprechenden Person haben und bei denen inbesondere auch der Effekt auftritt, daß ein vom Lautsprecher ausgesandtes akustisches Signal mit wesentlicher Amplitude und erheblicher Verzögerung beim Mikrofon auftritt, so daß die Gegenseite ein starkes und insbesondere erheblich verzögertes Echo empfängt, was sehr störend ist. Um dies zu verhindern, ist es bekannt, Anordnungen zur Unterdrückung akustischer Echos zu verwenden. Diese umfassen eine Subtrahieranordnung, ein Filter zum Filtern empfangener Sprachsignale und eine Rechenanordnung zum Ermitteln der Filterkoeffizienten des Filters. Die gefilterten empfangenen Sprachsignale werden der Subtrahieranordnung zugeführt, und die Rechenanordnung stellt die Filterkoeffizienten derart ein, daß am Ausgang der Subtrahieranordnung das vom Mikrofon aufgenommene akustische Signal durch das gefilterte Signal gerade ausgelöscht wird. Dabei bestimmt die Rechenanordnung die Filterkoeffizienten nur während einer Zeit, während der in der Stelle, wo die Echounterdrückung stattfinden soll, nicht gesprochen wird. Für eine gute Echounterdrückung ist jedoch eine sehr aufwendige Rechenanordnung erforderlich. Zusätzlich können auch gesteuerte Abschwächungen in den Signalpfaden vorgesehen werden, wie in der Zeitschrift "Philips Telecommunication Review" Vol. 49, No. 1, März 1991, Seiten 19 bis 27 beschrieben ist. Wegen dieses erforderlichen Aufwandes ist eine Freisprecheinrichtung bei einer Sprachsignalübertragung mit komplexer Codierung schwierig zu realisieren, da hierfür dieRechenleistung eines Signalprozessors normalerweise nicht ausreichend ist und eine 2-Prozessorlösung zu teuer wäre.

Der Erfindung liegt daher die Aufgabe zugrunde, ein System zum Übertragen von codierten Sprachsignalen mit einer komplexen Codierung anzugeben, in dem wenigstens eine Stelle zum Freisprechen eingerichtet ist und eine Anordnung zur Unterdrückung akustischer Echos enthält, die wenig Aufwand erfordert.

Diese Aufgabe wird erfindungsgemäß dadurch gelöst, daß in dem System die wenigstens eine zum Freisprechen eingerichtete Stelle eine Codieranordnung mit einem Signalprozessor und eine Anordnung zur Unterdrückung akustischer Echos mit einem adaptiven Filter enthält und für die Ermittlung von dessen Filterkoeffizienten eine Rechenanordnung vorgesehen ist, die durch den Signalprozessor der Codieranordnung gebildet ist.

Der Erfindung liegt die Erkenntnis zugrunde, daß der Signalprozessor in der Codieranordnung gerade in den Zeitabschnitten, in denen der Sprecher dieser Stelle nicht spricht, nur Codes für das Hintergrundgeräusch erzeugt. Dafür kann der Signalprozessor in einen Modus mit wesentlich weniger Verarbeitungsaufwand geschaltet werden, wie in der deutschen Patentanmeldung P 43 42 425.2 (PHD 93-189) beschrieben ist. Dadurch wird in solchen Sprachpausen dann Verarbeitungskapazität im Signalprozessor frei. Andererseits können nur in diesen Zeitabschnitten die Filterkoeffizienten bestimmt werden, und dadurch kann der Signalprozessor der Codieranordnung auch zum Ermitteln der Filterkoeffizienten benutzt werden. Dadurch kann bei einer komplexen Codierung von Sprachsignalen zusätzlich eine Freisprecheinrichtung mit geringem zusätzlichen Aufwand angewendet werden, der vorwiegend in der Subtrahieranordnung und in dem Filter besteht. Der wesentliche Aufwand einer Freisprecheinrichtung, der durch die Rechenanordnung zum Ermitteln der Filterkoeffizienten bestimmt wird, ist wegen der doppelten Ausnutzung des Signalprozessors der Codieranordnung nicht notwendig.

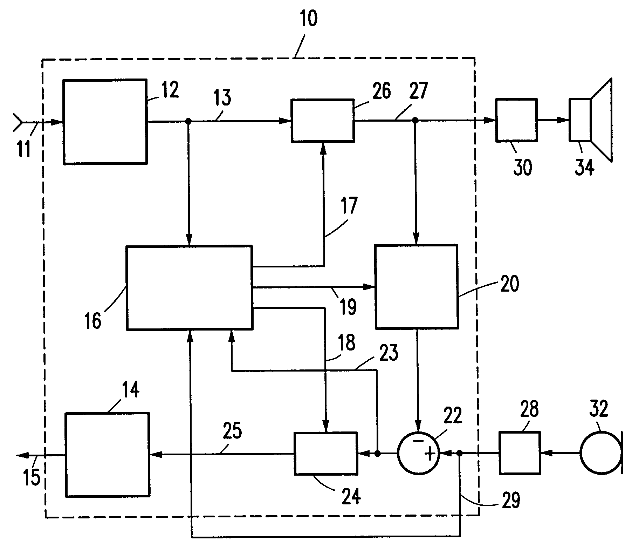

Ein Ausführungsbeispiel der Erfindung wird nachfolgend anhand der Zeichnung näher erläutert, die ein Blockschaltbild der wesentlichsten Teile eines Endgerätes zeigt, das sich an einer der beiden Stellen des Systems befindet, zwischen denen Sprachsignale übertragen werden. Die empfangenen Codewörter werden einer Leitung 11 von einem nicht dargestellten Empfänger zugeführt und führen auf eine Decodieranordnung 12, die auf der Leitung 13 digitale Sprachdaten erzeugt. Diese werden einer steuerbaren Abschwächungsanordnung 26 zugeführt, und die abgeschwächten digitalen Sprachsignale werden über die Leitung 27 einem Digital-Analog-Wandler und Verstärker 30 zugeführt, der einen Lautsprecher 34 speist.

Das vom Lautsprecher 34 abgestrahlte akustische Signal wird nicht nur von der benutzenden Person, sondern auch vom Mikrofon 32 aufgenommen, das im übrigen die Sprache der benutzenden Person empfängt. Das gemeinsame Signal wird einem Analog-Digital-Wandler 28 zugeführt. Das vom Wandler 28 gebildete digitale Sprachsignal wird über die Leitung 29 dem Minuendeneingang eines Subtrahierers 22 zugeführt, dessen Subtrahendeneingang über die Leitung 21 mit dem Ausgang eines Filters 20 mit einstellbaren Koeffizienten verbunden ist. Dem Filter 20 wird ebenfalls das empfangene digitale Sprachsignal auf der Leitung 27 zugeführt. Das Filter 20 soll den akustischen Weg zwischen dem Lautsprecher 34 und dem Mikrofon 32 nachbilden, so daß der vom Mikrofon 32 aufgenommene Signalanteil aus dem Lautsprecher 34 im Subtrahierer 22 weitgehend ausgelöscht wird. Auf der Leitung 23 entsteht dann ein echoreduziertes Sprachsignal, das einem weiteren steuerbaren Abschwächer 24 zugeführt wird. Dessen Ausgangssignal wird über die Leitung 25 einer Codieranordnung 14 zugeführt, die am Ausgang 15 codierte Sprachsignale für eine nicht dargestellte Sendevorrichtung erzeugt.

Die Abschwächer 24 und 26 sowie insbesondere das Filter 20 werden von einer Rechenanordnung 16 gesteuert, die das empfangene decodierte Sprachsignal auf der Leitung 13 sowie das vom Mikrofon 32 aufgenommene Signal auf der Leitung 29 empfängt, und außerdem das Ausgangssignal des Subtrahierers 22 auf der Leitung 23. Die Steuerung der Abschwächer 24 und 26 ergibt sich aus der eingangs genannten Druckschrift "Philips Telecommunication Review", und die Berechnung der Filterkoeffizienten ist beispielsweise in der EP-A 0 301 627 (PHN 12 180) beschrieben. Dabei erfolgt die Berechnung der Filterkoeffizienten des Filters 20 nur in Sprachpausen, d.h. wenn die Person, die die dargestellte Schaltungsanordnung benutzt, nicht spricht, was auf einfache, nicht näher dargestellte Weise ermittelt werden kann. Dann empfängt das Mikrofon 32 im wesentlichen nur ein Signal vom Lautsprecher 34. Die Rechenanordnung 16 stellt die Filterkoeffizienten des Filters 20 nun so ein, daß dieses vom Mikrofon aufgenommene Signal in der Subtrahieranordnung 22 gerade ausgelöscht wird und auf der Leitung 23 praktisch kein Signal mehr erscheint.

Damit empfängt die Codieranordnung 14 jedoch ebenfalls praktisch kein Signal, und es werden am Ausgang 15 nur Codes für ein Hintergrundgeräusch erzeugt. Dafür wird die Codieranordnung 14 in Sprachpausen in einen Modus geschaltet, in dem nur wenig Verarbeitungsaufwand erforderlich ist, wie in der erwähnten deutschen Patentanmeldung P 43 42 425.2 angegeben ist.

Die Rechenanordnung 16, die Codieranordnung 14 und die Decodieranordnung 12 sowie das Filter 20 und die Abschwächer 24 und 26 werden nun durch eine Einheit 10 gebildet, die im wesentlichen einen Signalprozessor mit einem entsprechenden Speicher enthält. Dieser führt die Funktionen der Decodieranordnung 12, der Codieranordnung 14, der Rechenanordnung 16 und des Filters 20 aus. In Sprachpausen erfolgt dabei durch den Signalprozessor die Berechnung der Filterkoeffizienten des Filters 20, während in den Zeitabschnitten, in denen die benutzende Person selbst spricht, keine neuen Filterkoeffizienten errechnet werden, sondern die vorher berechneten Koeffizienten unverändert dem Filter 20 zugeführt werden, jedoch erzeugt der Signalprozessor nun die codierten Sprachsignale entsprechend der Codieranordnung 14. In jedem Falle werden auch die auf der Leitung 11 empfangenen codierten Signale vom Signalprozessor decodiert, da dies nur sehr wenig Aufwand erfordert. Der Signalprozessor kann also die Funktionen der im Blockschaltbild dargestellten Blöcke 12, 14, 16 und 20 übernehmen, da die Funktionen 14 und 16 im wesentlichen nur abwechselnd benötigt werden. Auf diese Weise ist mit geringem Aufwand eine Freisprecheinrichtung im Zusammenhang mit einer komplexen Sprachcodierung geschaffen.

## Patentansprüche

1. System zum Übertragen von codierten Sprachsignalen zwischen zwei Stellen in beiden Richtungen gleichzeitig, wobei jede Stelle eine Codieranordnung enthält zum Erzeugen von Codes aus den auszusendenden Sprachsignalen, die einen Signalprozessor enthält, der in Sprachpausen der aussendenden Stelle Codes mit wesentlich weniger Verarbeitungsaufwand erzeugt, als für die Erzeugung von Codes aus zu übertragenden Sprachsignalen erforderlich ist, und wenigstens eine Stelle eine Anordnung zur Unterdrückung akustischer Echos enthält, die eine Subtrahieranordnung, ein adaptives Filter zum Filtern empfangener Sprachsignale und eine Rechenanordnung zum Ermitteln der Filterkoeffizienten des Filters aufweist, wobei die Rechenanordnung durch den Signalprozessor gebildet ist.

2. Mobile Station mit Freisprecheinrichtung zum Aussenden und Empfangen von codierten Sprachsignalen gleichzeitig, mit einer Codieranordnung zum Erzeugen von Codes aus den auszusendenden Sprachsignalen, die einen Signalprozessor enthält, der in Sprachpausen der aussendenden Stelle Codes mit wesentlich weniger Verarbeitungsaufwand erzeugt, als für die Erzeugung von Codes aus zu übertragenden Sprachsignalen erforderlich ist, und mit einer Anordnung zur Unterdrückung akustischer Echos, die eine Subtrahieranordnung, ein adaptives Filter zum Filtern empfangener Sprachsignale und eine Rechenanordnung zum Ermitteln der Filterkoeffizienten des Filters aufweist, wobei die Rechenanordnung durch den Signalprozessor gebildet ist.

3. Schaltungsanordnung für ein System zum Übertragen von codierten Sprachsignalen zwischen zwei Stellen in beiden Richtungen gleichzeitig, mit einer Codieranordnung zum Erzeugen von Codes aus den auszusendenden Sprachsignalen, die einen Signalprozessor enthält, der in Sprachpausen der aussendenden Stelle Codes mit wesentlich weniger Verarbeitungsaufwand erzeugt, als für die Erzeugung von Codes aus zu übertragenden Sprachsignalen erforderlich ist, und mit einer Anordnung zur Unterdrückung akustischer Echos, die eine Subtrahieranordnung, ein adaptives Filter zum Filtern empfangener Sprachsignale und eine Rechenanordnung zum Ermitteln der Filterkoeffizienten des Filters aufweist, wobei die Rechenanordnung durch den Signalprozessor gebildet ist.
